# EUROPEAN PATENT APPLICATION

(11) **EP 3 832 490 A1**
(43) Date of publication of application: **09.06.2021**
(21) Application number: 19844667.6
(22) Date of filing: 19.06.2019
(51) Int. Cl.: G06F 16/532, G06F 16/538, G06F 16/55, G06T 7/00

(54) **IMAGE INFORMATION DISPLAY DEVICE**

(30) Priority: 03.08.2018 JP 2018147173
(71) Applicant: Linne Corporation, Tokyo, 151-0051 (JP)
(72) Inventor: SUGIMOTO Kenichi, Tokyo 151-0051 (JP)
(74) Representative: Jordan, Volker Otto Wilhelm
(86) International application number: PCT/JP2019/024377
(87) International publication number: WO 2020/026630

(57) **Abstract**

Provided is an image information display device capable of quickly displaying information such as the category of a shot target together with an image and increasing usability and merchantability. In the image information display device (1), priorities are added to image data of a plurality of targets shot by a camera (3) (STEP 6), and the image data of the plurality of targets with the priorities added thereto is applied to a second DNN model in accordance with the priorities, so that the categories to which the plurality of targets belongs are estimated along with the probabilities P (STEP 51). Display data representing the categories of the respective targets is displayed together with the images and the probabilities of the respective targets (STEP 7).

## Description

### Technical Field

The present invention relates to an image information display device that displays information such as the category of a shot target together with the image of the target.

### Background Art

Conventionally, there has been known an image information display system described in Patent Literature 1. This image information display system is composed of a mobile terminal, an information server connected to the mobile terminal via a network, and the like. In this image information display system, when a user shoots a target with the mobile terminal, the shot image data is sent to the information server via the network with the information of the shooting time and the shooting location associated with the image data. Then, in this information server, the target of the shot image is searched for and the search result is sent to the mobile terminal. Thereby, the search information of the shot target is displayed on the mobile terminal.

### Citation List

### Patent Literature

Patent Literature 1: Japanese Patent Application Laid-Open No. 2003-323440

### Summary of Invention

### Technical Problem

According to the above conventional image information display system, the image data or the like of a shooting target is sent from the mobile terminal to the information server side via the network, and then the search information on this information server is sent to the mobile terminal via the network. Therefore, the time from shooting the target until the search information is displayed on the mobile terminal (hereinafter, referred to as "display waiting time") is long, which leads to low usability and merchantability problematically. Particularly, in the case where a dynamic target is displayed as a moving image on a mobile terminal, a long display waiting time of the search information may cause the user to feel dissatisfied or may cause an event such that the target disappears from the display screen before the search information is displayed. As a result, usability and merchantability are further reduced.

The present invention has been provided to solve the above problem. Therefore, it is an object of the present invention to provide an image information display device capable of quickly displaying information such as the category of a shot target together with the image and improving usability and merchantability.

### Solution to Problem

To achieve the above object, according to an aspect of the present invention, there is provided an image information display device including: an imaging unit capable of simultaneously shooting a plurality of targets; a display unit that displays an image; a first control unit that performs a priority addition process of adding priorities to image data of the plurality of targets shot by the imaging unit; a second control unit that performs an estimation process of estimating a category, to which each of the plurality of targets belongs in a predetermined control cycle, by applying the image data of the plurality of targets with the priorities added by the first control unit to an algorithm including a predetermined estimation algorithm in accordance with the priorities; and a display control unit that performs a display control process of displaying display data representing the category of the each target estimated in the estimation process along with the image of the each target on the display unit.

According to the image information display device, the first control unit performs the priority addition process of adding the priorities to the image data of the plurality of targets shot by the imaging unit. Furthermore, the second control unit performs the estimation process of estimating the category, to which each of the plurality of targets belongs in the predetermined control cycle, by applying the image data of the plurality of targets with the priorities added thereto to the algorithm including the predetermined estimation algorithm in accordance with the priorities. In addition, the display control unit performs the display control process of displaying the display data representing the category of the each target estimated in the estimation process along with the image of the each target on the display unit.

In this manner, the categories of the plurality of the respective targets are estimated by applying the image data of the plurality of targets with the priorities added thereto to the algorithm including the predetermined estimation algorithm in accordance with the priorities. Therefore, unlike the configuration of Patent Literature 1, the category of each of the plurality of targets can be displayed on the display unit in a short time after each target is photographed, without performing data communication between two devices via a network.

This enables the category of each shot target to be quickly displayed along with the image and enables usability and merchantability to be improved. For example, even in the case where a plurality of dynamic targets is displayed as a moving image with a display unit, tentative categories of a plurality of targets can be quickly displayed along with the image, by which usability and merchantability can be further improved. Moreover, for example, the image information display device is configured as a portable device, thereby further improving merchantability. In addition thereto, the image data of the plurality of targets with priorities added thereto is applied to the algorithm including the predetermined estimation algorithm in accordance with the priorities. Therefore, appropriate setting of the priorities enables a further reduction in the time required to display the respective categories of the plurality of targets on the display unit.

In the present invention, preferably, the category to which the each target belongs is estimated along with a probability in the estimation process, and the image of the each target is displayed with being surrounded by a frame and probability data representing the probability and the display data are displayed near the frame in the display control process.

According to the image information display device, the category to which the each target belongs is estimated along with a probability in the estimation process, and the image of the each target is displayed with being surrounded by a frame and probability data representing the probability and the display data are displayed near the frame in the display control process. This enables an increase in visibility and interest when a user of the image information display device visually recognizes the category estimated in the estimation process.

In the present invention, preferably, preferably, the category to which the each target belongs is estimated along with a probability in the estimation process, and the image of the each target is displayed with being correlated with at least one of the probability data representing the probability and the display data through at least one of an arrow and a line segment in the display control process.

According to the image information display device, the category to which the each target belongs is estimated along with a probability in the estimation process, and the image of the each target is displayed with being correlated with at least one of the probability data representing the probability and the display data through at least one of an arrow and a line segment in the display control process. This enables the user of the image information display device to visually recognize the image of each target and the category estimated in the estimation process while correlating the image with the category and the probability, thereby enabling an increase in visibility and interest.

In the present invention, preferably, the category to which the each target belongs is estimated along with the probability in the estimation process, and the priorities are added to the image data of the plurality of targets estimated along with the probabilities in the estimation process in accordance with the probabilities in the priority addition process.

According to the image information display device, the category to which the each target belongs is estimated along with the probability in the estimation process, and the priorities are added to the image data of the plurality of targets estimated along with the probabilities in the estimation process in accordance with the probabilities in the priority addition process. Thereby, in the second control unit, the estimation process is performed using the image data of the plurality of targets to which priorities are added in accordance with the previous arithmetic operation probability. Therefore, the priorities are set appropriately depending on the probability levels or the like, thereby enabling the categories of the image data of the plurality of targets to be estimated while avoiding the probabilities from being kept low and enabling the category estimation probabilities in the image data of the plurality of targets to be rapidly increased.

In the present invention, preferably, the category is estimated as the lowest category to which the each target belongs in the estimation process, and in the display control process, the image of the each target is displayed on the display unit with being surrounded by a frame, while display data representing a higher category than the lowest category and probability data representing the probability are displayed near the frame in the case where the probability of the lowest category is less than a predetermined threshold, and the image of the each target is displayed on the display unit with being surrounded by a frame, while display data representing the lowest category and probability data representing the probability are displayed near the frame in the case where the probability of the lowest category is equal to or greater than the predetermined threshold.

According to the image information display device, one of the display data representing the lowest category and the display data representing a category higher than the lowest category is displayed near the image of each target surrounded by the frame along with the probability data representing a probability, according to a magnitude relationship between the probability of the lowest category and the predetermined threshold. Therefore, appropriate setting of the predetermined threshold enables a user to recognize that the lowest category of each target is successfully estimated with accuracy in a short time. Thereby, the merchantability can be further improved.

### Brief Description of Drawings

FIG. 1 is a front view illustrating the configuration of an image information display device according to one embodiment of the present invention.
FIG. 2 is a rear view illustrating the configuration of the image information display device.
FIG. 3 is a block diagram illustrating the configuration of the image information display device.
FIG. 4 is a flowchart illustrating the contents of a first control process.
FIG. 5 is a flowchart illustrating the contents of a first arithmetic process.
FIG. 6 is an explanatory diagram of a queue data group with priorities.
FIG. 7 is a flowchart illustrating the contents of a display control process.
FIG. 8 is a diagram illustrating a display state of a shot image and an enclosure during execution of a single mode.
FIG. 9 is a diagram illustrating a state where a "family" category and a probability are additionally displayed in FIG. 8.
FIG. 10 is a diagram illustrating a state where a "species" category and a probability are additionally displayed in FIG. 8.
FIG. 11 is a diagram illustrating a display state of a shot image and an enclosure during execution of a multi-mode.
FIG. 12 is a diagram illustrating a state where the "family" and "species" categories and probabilities are additionally displayed in FIG. 11.
FIG. 13 is a flowchart illustrating the contents of a browsing data storage process.
FIG. 14 is a flowchart illustrating the content of a second control process.
FIG. 15 is a flowchart illustrating the contents of a browsing control process.
FIG. 16 is a diagram illustrating an example of a screen display of a case where a history display mode control process has been performed.

### Description of Embodiments

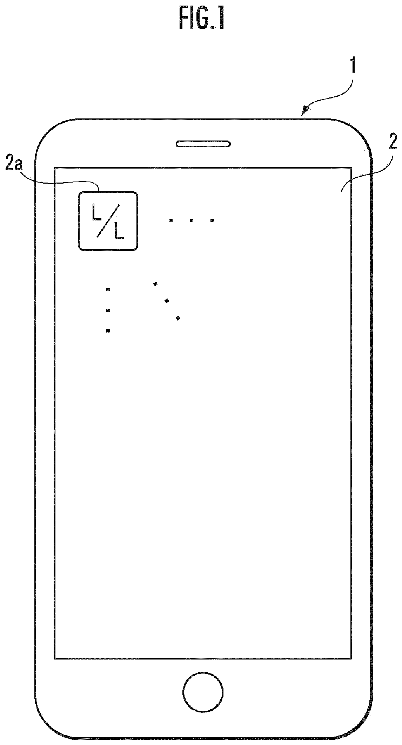

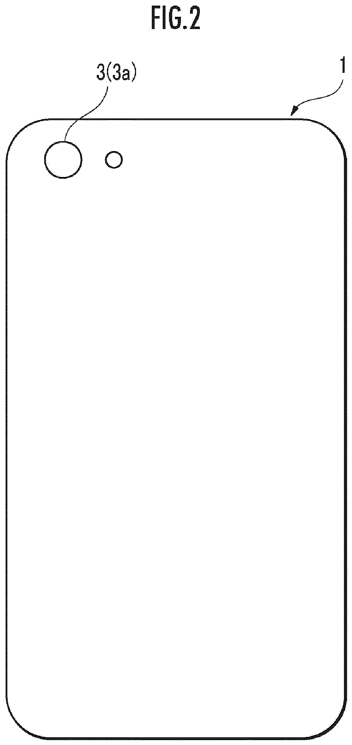

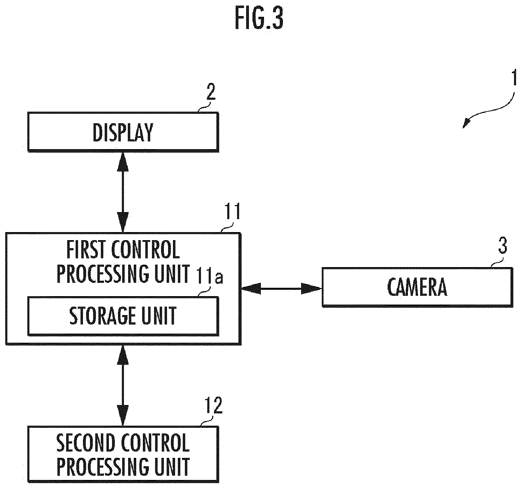

An image information display device according to one embodiment of the present invention will be described below with reference to appended drawings. The image information display device 1 of this embodiment is of a smartphone type as illustrated in FIGs. 1 and 2 and includes a display 2, a camera 3, a first control processing unit 11, a second control processing unit 12, and the like as illustrated in FIG. 3.

This display 2 (display unit), which is formed of a capacitive touch panel, is arranged over almost the entire front surface of the image information display device 1. This display 2 is electrically connected to the first control processing unit 11, and when an image signal described later is input from the first control processing unit 11, the image included in the image signal is displayed as a moving image or a still image.

In addition, when a user performs an input operation (for example, tap, swipe, pinch out, and pinch in) on the display 2, an operation signal indicating it is output to the first control processing unit 11.

Furthermore, in the case where the home screen is displayed on the display 2, an icon 2a for starting the category display application software (hereinafter, referred to as "category display software") is displayed in a determined part on the home screen.

If this icon 2a is selected by a user's input operation (for example, a tap operation) to the display 2, an operation signal representing it is output to the first control processing unit 11. Accordingly, the category display software is started and executed by the first control processing unit 11.

This category display software is configured to enable a display action mode thereof to be switched between multi-mode and single mode by a user's input operation (for example, pinch-in/pinch-out operation) to the display 2 during execution of a display control process described later.

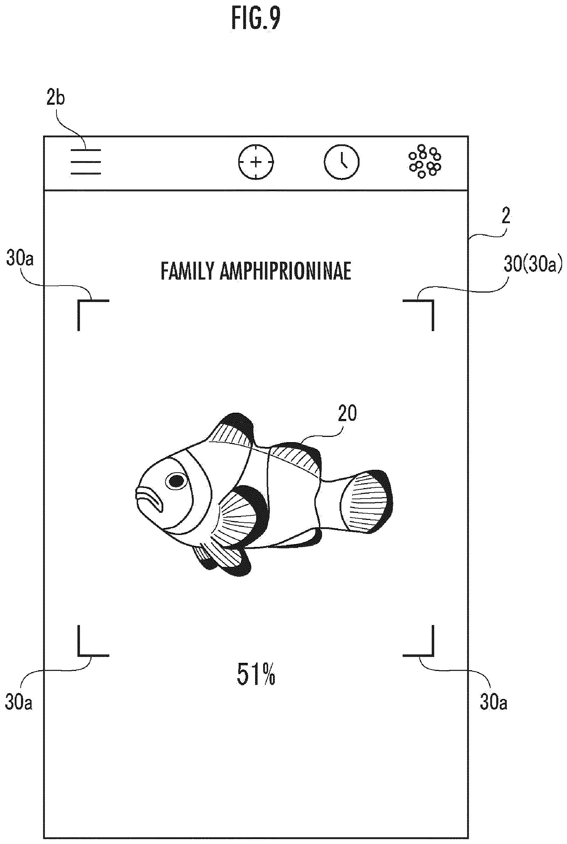

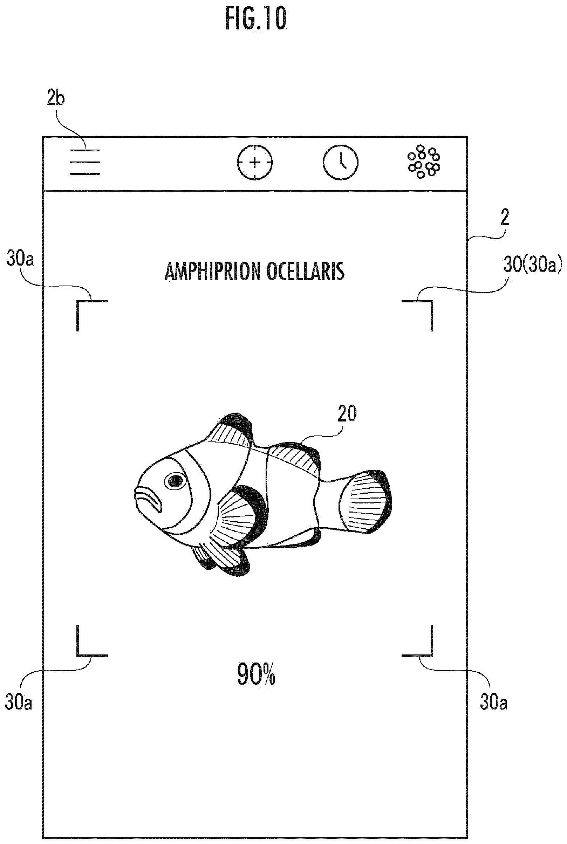

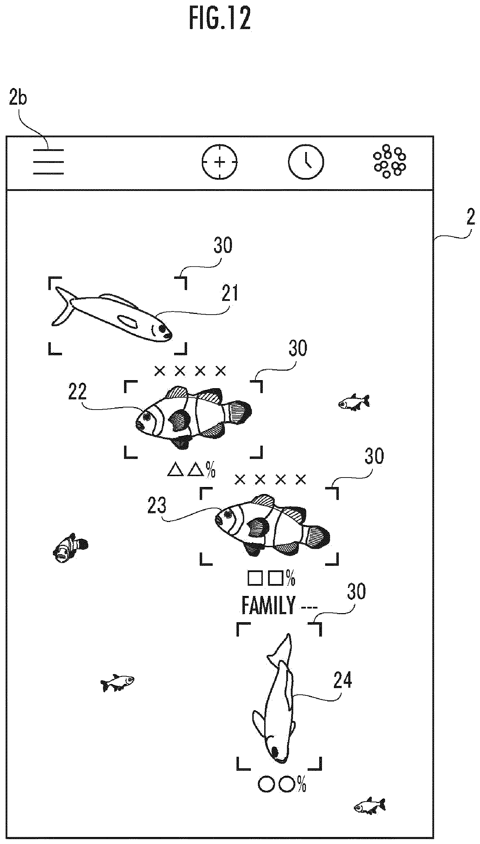

In this single mode, when a single target is shot by the camera 3, an image thereof is displayed as a moving image on the screen of the display 2 along with a category with an enclosure (see FIGs. 9 and 10 described later). This embodiment is described by giving an example of a "living thing" as a shooting target. On the other hand, in the multi-mode, when a plurality of targets is shot by the camera 3, an image of each of the plurality of targets is displayed as a moving image on the screen of the display 2 along with a category with an enclosure (see FIG. 12 described later).

Furthermore, the camera 3 (imaging unit) is configured to be able to shoot the moving image and still image of the shooting target, and its lens 3a is located on the upper left side of the back of the image information display device 1. This camera 3 is also electrically connected to the first control processing unit 11, and during its running, the image signal, which is the data signal of the shot image, is output to the first control processing unit 11 described later.

In the case of the camera 3, the moving image of the shooting target is automatically taken during execution of the above-mentioned category display software, and the image signal representing its frame is output to the first control processing unit 11.

On the other hand, the first control processing unit 11 includes a processor, a storage unit 11a, an I/O interface, a wireless communication circuit, and the like (not illustrated except for the storage unit 11a). This storage unit 11a is composed of a ROM, a RAM, an E2PROM, and the like, and the above-mentioned category display software program and the first DNN (deep neural network) model are stored in the storage unit 11a. In this first DNN model, parameter learning has been sufficiently performed in advance by a deep learning method.

In the deep learning method, in addition to the image data of dozens of different types of living things, image data of common objects are used as learning targets. In this case, the living things as learning targets are dozens of different types of living things in the categories below the class included in the phylum Vertebrata and the phylum Invertebrata. For example, in the case of the phylum Vertebrata, the living things are those belonging to classes Mammal, Bird, Reptilia, Amphibian, Actinopterygii, Sarcopterygii, and the like. In the case of the phylum Invertebrata, the living things are those belonging to respective classes of phylums Arthropod, Mollusk, Echinodermata, Cnidaria, and the like.

Furthermore, the common objects as learning targets are cups, electronic devices, and the like. The reason for learning these common objects is to avoid erroneous decision with the above-described living things. Furthermore, in the storage unit, databases of categories below the phylum Vertebrata and below the phylum Invertebrata are stored in the order of "phylum" => "class." With the above configuration, in the first DNN model, when the image data of a living thing under any one of the above categories is input and the living thing in the image can be estimated or recognized, the category of "class," which is a large category higher than the lowest category "species" to which the living thing of the image data belongs, is output as data.

In the first control processing unit 11, upon the selection on the action mode menu during execution of the category display software, the first control process is performed using the above first DNN model on the basis of the image signal from the camera 3, as described later. Furthermore, as described later, the browsing control process is performed when a browsing mode is selected during execution of the category display software. In this embodiment, the first control processing unit 11 corresponds to a first control unit and a display control unit.

In addition, the second control processing unit 12 (second control unit) is separate from the first control processing unit 11 and includes a processor, a storage unit, an I/O interface, and the like (none of them are illustrated). This storage unit includes a ROM, a RAM, an E2PROM, and the like, similarly to the storage unit 11a described above.

This storage unit stores a second DNN (deep neural network) model, which is separate from the first DNN model described above, and the second DNN model is also formed of a DNN model in which parameter learning has been sufficiently performed in advance by a deep learning method.

In the case of the second DNN model, learning targets are image data of much more types (for example, thousands of types) of living things than those of the first DNN model described above and image data of common objects. Furthermore, the storage unit stores databases of categories below the phylum Vertebrata and below the phylum Invertebrata in the order of "phylum" => "class" => "order" => "family" => "species." With the above configuration, in the second DNN model, when the image data of a living thing in the above category is input and the living thing in the image is able to be estimated or recognized, the lowest category "species" to which the living thing of the image data belongs is output as data.

In this second control processing unit 12, when TID-associated data is input from the first control processing unit 11, the lowest category "species" of the living thing of the image and a probability P thereof are estimated using the above second DNN model, as described later.

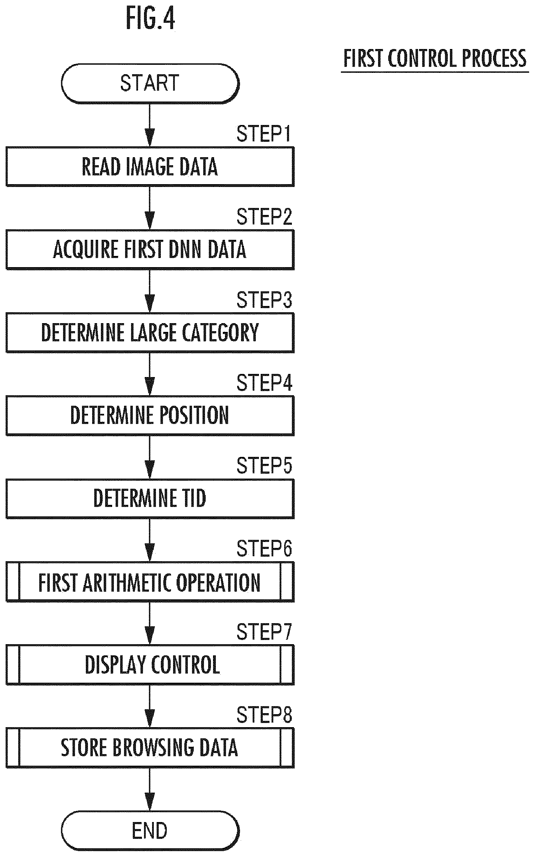

Subsequently, the first control process performed by the first control processing unit 11 is described with reference to FIG. 4. The first control process is to display the image of a living thing shot by the camera 3 as a moving image on the display 2 along with an enclosure and the like described later during running of the above-mentioned category display software.

In the first control process, a menu bar 2b (see FIG. 9) in the screen of the display 2 is operated by a user's input operation (for example, a drag operation) during running of the category display software and the action mode menu (not illustrated) is displayed in the menu bar 2b, and then the process is performed in a predetermined control cycle (for example, 100 msec) upon selection on the action mode menu. Thereafter, the process continues to be performed unless the user performs the end operation.

Hereinafter, the contents of the first control process will be described by giving an example of a case where the Actinopterygii class fish exhibited in an aquarium is shot by the camera 3. Unless otherwise specified, various data calculated or processed in the following description shall be stored in the RAM of the storage unit 11 a at its control timing. In addition, the fish image displayed on the screen of the display 2 shall be displayed as a moving image unless otherwise specified.

As illustrated in FIG. 4, first, the image data is read, where the image data is contained in the image signal input from the camera 3 (FIG. 4: STEP 1).

Subsequently, the first DNN data acquisition process is performed (FIG. 4: STEP 2). In the first DNN data acquisition process, after the read image data is input to the first DNN model, the output data is acquired when the image data is output from the first DNN model. The output data of the first DNN model is output without probability P assigned.

Subsequently, a large category determination process is performed (FIG. 4: STEP 3). In this process, the large category is determined when a fish in the image in the output data can be recognized or estimated on the basis of the output data of the first DNN model. The large category in this case is a "class" category. In the case where the image data of the fish is input to the first DNN model and the fish in the output data of the first DNN model is recognized, the "class Actinopterygii" is determined as a large category.

Then, the position determination process is performed (FIG. 4: STEP 4). This process determines the display position (X-Y coordinate position) and display size of the image for displaying the fish whose large category described above is determined on the screen of the display 2. At the same time, the display position and display size of an enclosure are determined.

Specifically, in the multi-mode described above, in the case where the image data of many fish shot by the camera 3 is input to the first DNN model and a plurality of fish is recognized to be fish in the category of the class Actinopterygii from the output data of the first DNN model, the display position and display size of the image are determined for each of the fish. At the same time, the display position and display size of the enclosure are determined.

On the other hand, in the above-described single mode, in the case where the image data of one fish is input to the first DNN model and this fish is recognized to be a fish belonging to the category of the class Actinopterygii from the output data of the first DNN model, the display position and the size of the display image are determined for the fish. At the same time, the size and position of the enclosure is determined.

Then, the TID determination process is performed (FIG. 4: STEP 5). In this process, a TID (tracking identifier), which is an identifier, is associated, as described below, with the image data of the fish whose large category is determined from the output data of the first DNN model as described above.

Specifically, in the case of the multi-mode, it is determined whether the TID has been associated at the control timing before the previous time on the basis of the position in the output data of the first DNN model of the fish whose large category is determined and the determined large category (in other words, class Actinopterygii). Then, the TID association is not performed for a fish with which the TID has already been associated, while a new TID is associated with a fish with which no TID is associated.

Even in the case where the TID has already been associated with the target whose position in the output data of the first DNN model is the same at the control timing before the previous time, a new TID is associated with the target in the case where the large category of the target has been changed (for example, the class Actinopterygii => the class Reptilia). In the following description, the image data with which the TID is associated is referred to as "TID-associated data."

On the other hand, in the single mode as well, the TID determination process is performed in the same way as the above.

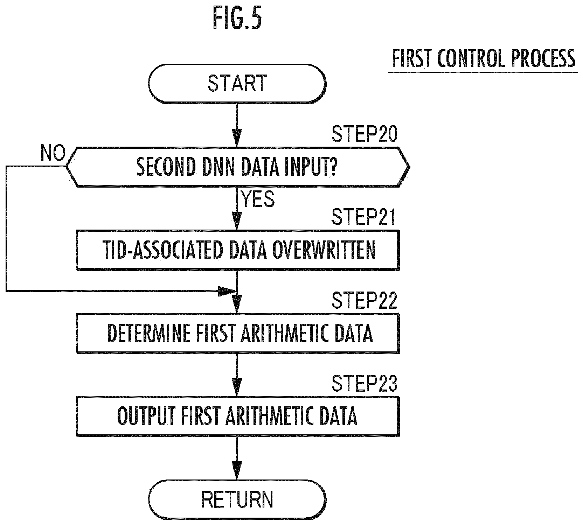

Subsequently, a first arithmetic process is performed (FIG. 4: STEP 6). This first arithmetic process is to determine the first arithmetic data, which is TID-associated data for transmission to the second control processing unit 12, and to output the first arithmetic data to the second control processing unit 12. Specifically, the first arithmetic process is performed as illustrated in FIG. 5.

As illustrated in FIG. 5, first, between the previous control timing and the current control timing, it is determined whether or not the second DNN data described later is input from the second control processing unit 12 (FIG. 5: STEP 20).

If this determination is negative (FIG. 5: NO in STEP 20), the control proceeds to the first arithmetic data determination process (FIG. 5: STEP 22) described later.

On the other hand, if this determination is affirmative (FIG. 5: YES in STEP 20), the TID-associated data with the probability P included in the second DNN data is read out and then the same TID-associated data stored in the storage unit 11a is overwritten with the read-out data (FIG. 5: STEP 21). Subsequently, the determination process of the first arithmetic data is performed (FIG. 5: STEP 22) as described below.

In this process, the first arithmetic data is determined as described below. Specifically, the TID-associated data stored in the storage unit 11a is directly determined as the first arithmetic data during execution of the single mode.

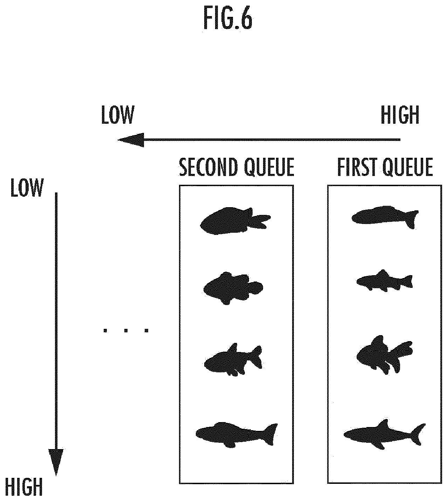

On the other hand, in the case of the multi-mode, first, the priority queue data group is created as described below. The priority queue data group is a plurality of pieces of TID-associated data stored in the storage unit 11a, which are queued with the priorities for an arithmetic operation assigned. Specifically, the priority queue data group is created as illustrated in FIG. 6 on the basis of the probability P assigned to a plurality of TID-associated data pieces and of the creation order (the order in which the TIDs are associated).

As illustrated in FIG. 6, the plurality of TID-associated data pieces is arranged side by side in one of the first queue, the second queue, and so on. The number of these queues varies depending on the total number of pieces of TID-associated data and on the probabilities P assigned to the TID-associated data or the like.

The highest-priority TID-associated data is arranged in the first queue. Specifically, TID-associated data pieces to which probabilities P are not assigned are arranged from the bottom to the top of FIG. 6 according to the creation order. In other words, in the first queue, the highest-priority TID-associated data is placed at the bottom, followed by the next-highest-priority TID-associated data.

In the second queue, the next-highest-priority TID-associated data pieces after the TID-associated data pieces in the first queue are arranged side by side. In the case of the TID-associated data pieces arranged in the second queue, TID-associated data pieces with relatively low probabilities P are arranged from the bottom to the top of FIG. 6 according to the creation order.

Furthermore, if a third queue is present, the next-highest-priority TID-associated data pieces after the TID-associated data pieces in the second queue are arranged side by side in the third queue. The TID-associated data pieces in the third queue have higher probabilities P assigned than the TID-associated data pieces in the second queue, and are arranged from the bottom to the top in FIG. 6 according to the creation order.

In addition thereto, in the case of the priority queue data group, the upper limit Nmax of the total number of data pieces is predetermined. Therefore, for example, when one piece of data is added to any queue and the current total number of data pieces N exceeds the upper limit Nmax, the last added data piece is deleted from the lowest-priority queue.

Then, in the multi-mode, after creating the priority queue data group as described above, the TID-associated data piece with the highest priority in the priority queue data group (in FIG. 6, the data piece at the bottom of the first queue) is determined as first arithmetic data.

After performing the first arithmetic data determination process (FIG. 5: STEP 22) as described above, the determined first arithmetic data is output to the second control processing unit 12 (FIG. 5: STEP 23). Then, this process ends.

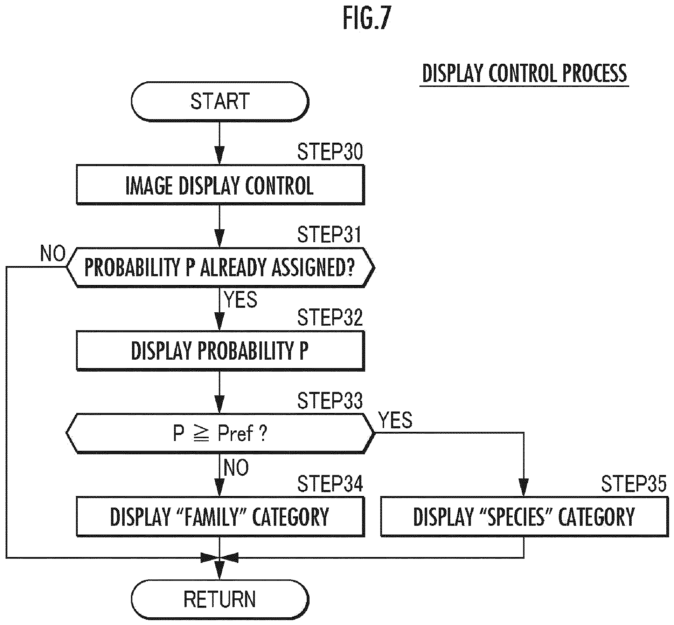

Returning to FIG. 4, after performing the first arithmetic process (FIG. 4: STEP 6) as described above, a display control process is performed (FIG. 4: STEP 7). The display control process is to display the fish image and the enclosure image at the display position and display image size determined in the position determination process (FIG. 4: STEP 4) described above, and the display control process is performed as illustrated in FIG. 7.

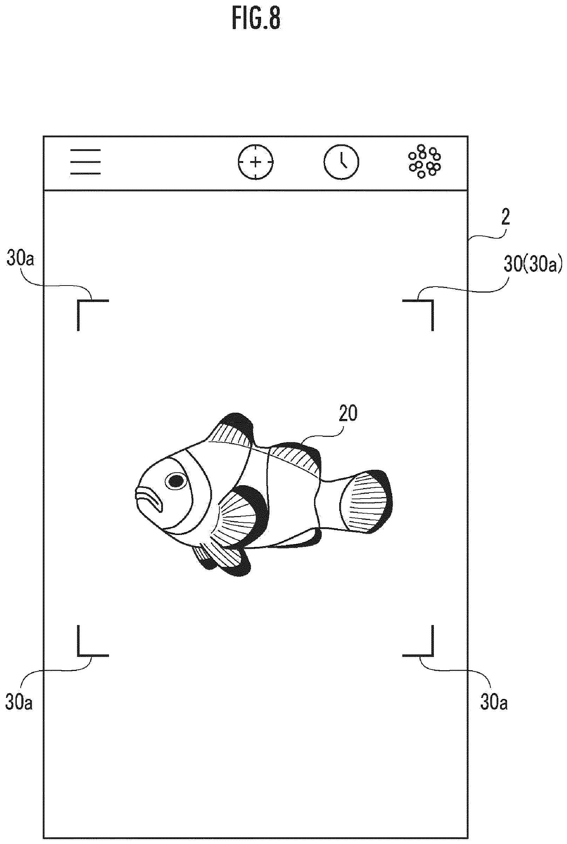

First, description is made on the display control process during execution of the single mode. As illustrated in FIG. 7, first, the image display control process is performed (FIG. 7: STEP 30). In this process, as illustrated in FIG. 8, the fish image 20 in the TID-associated data is displayed on the screen of the display 2, and an enclosure 30 is displayed in the display position and display size determined as described above.

In the case of this enclosure 30, four frame parts 30a are displayed so as to border the four corners of the image 20, and each frame part 30a is set to a shape formed by combining two line segments orthogonal to each other.

Subsequently, it is determined whether or not a probability P is assigned to the TID-associated data (FIG. 7: STEP 31). If the determination is negative (FIG. 7: NO in STEP 31), this process is terminated directly.

On the other hand, if the determination is affirmative (FIG. 7: YES in STEP 31), in other words, if a probability P is assigned to the TID-associated data, this probability P is displayed (FIG. 7: STEP 32). As illustrated in FIGs. 9 and 10, the probability P (51% in FIG. 9 and 90% in FIG. 10) is displayed below the image 20 and in the middle of the two lower frame parts 30a and 30a.

Subsequently, it is determined whether or not the probability P is equal to or higher than a determined threshold Pref (for example, 52%) (FIG. 7: STEP 33). If the determination is negative (FIG. 7: NO in STEP 33), the "family" category of the fish is displayed (FIG. 7: STEP 34). As illustrated in FIG. 9, the "family" category (family Amphiprioninae in FIG. 9) of the fish is displayed above the image 20 and in the middle of the two upper frame parts 30a and 30a. After displaying the "family" category in this way, this process ends. In this case, the reason for displaying the "family" category is that, in the case where a category higher than "family" such as, for example, a "class" or "order" category is displayed, low estimation accuracy of the category may mislead the user and to avoid the misleading.

On the other hand, if the above determination is affirmative (FIG. 7: YES in STEP 33), in other words, if P ≥ Pref is satisfied, the "species" category of the fish is displayed (FIG. 7: STEP 35). As illustrated in FIG. 10, the "species" category (Amphiprion ocellaris in FIG. 10) of the fish is displayed above the image 20 and in the middle of the two upper frame parts 30a and 30a similarly to the "family" category. After displaying the "species" category as described above, this process ends.

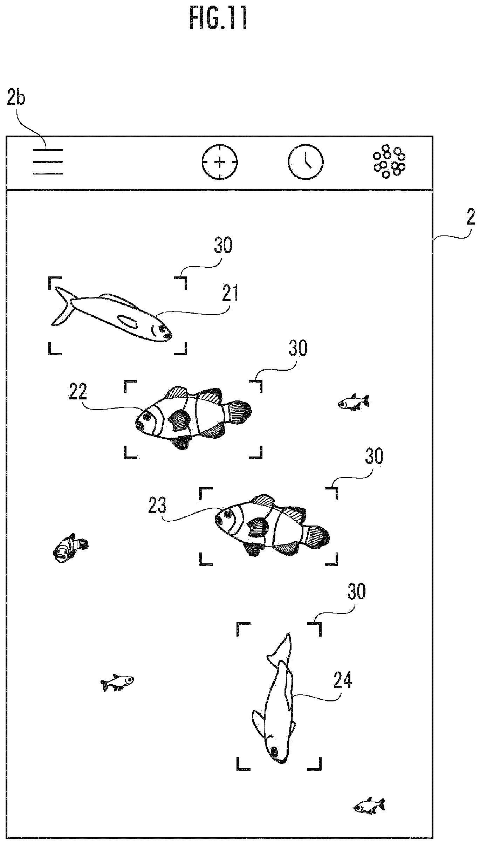

Subsequently, description will be made on the display control process during execution of the multi-mode. For example, if TID-associated data is created for four fish images, the execution of the image display control process in STEP 30 described above will result in four fish 21 to 24 displayed on the screen of the display 2 respectively surrounded by enclosures 30, as illustrated in FIG. 11.

Subsequently, the above-described processes in STEPS 31 to 35 are performed, by which only the enclosure 30 is displayed for the fish image 21 for which no probability P is assigned to TID-associated data as illustrated in FIG. 12. Moreover, for the fish images 22 and 23 for which P ≥ Pref is satisfied among the fish images 22 to 24 for which probabilities P are assigned to TID-associated data, the "species" categories and probabilities P are displayed respectively with enclosures 30.

On the other hand, for the fish image 24 for which P <Pref is established, the "family" category and a probability P are displayed along with an enclosure 30. The display control process is performed as described above during execution of the multi-mode.

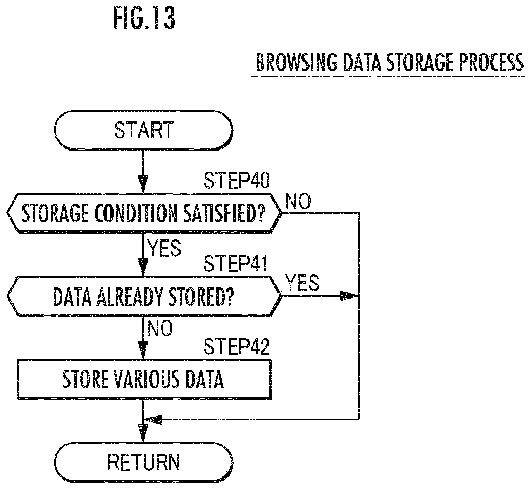

After returning to FIG. 4 and performing the display control process (FIG. 4: STEP 7) as described above, a browsing data storage process is performed (FIG. 4: STEP 8). This process is to store the image data, the "species" category, and the like displayed on the display 2 as described above as browsing data for a user to browse later into the E2PROM of the storage unit 11a. Specifically, the process is performed as illustrated in FIG. 13.

First, the browsing data storage process during execution of the single mode will be described. As illustrated in FIG. 13, first, it is determined whether or not the storage condition is satisfied (FIG. 13: STEP 40). In this case, if the probability P of the TID-associated data stored in the RAM of the storage unit 11a is equal to or higher than a predetermined probability Plmt, it is determined that the storage condition is satisfied, and otherwise, the storage condition is determined to be not satisfied.

If the determination is negative (FIG. 13: NO in STEP 40), this process is terminated directly. On the other hand, if the determination is affirmative (FIG. 13: YES in STEP 40), in other words, if the probability P of the TID-associated data is equal to or higher than the predetermined probability Plmt, it is determined whether or not this data has already been stored in the E2PROM (FIG. 13: STEP 41). This predetermined probability Plmt is set to a predetermined value of 100% or close to it.

If the determination is affirmative (FIG. 13: YES in STEP 41), this process is terminated directly. On the other hand, if the determination is negative (FIG. 13: NO in STEP 41), various data are stored in the E2PROM (FIG. 13: STEP 42). Specifically, as various data, image data in TID-associated data, a "species" category, a probability, and date and time are stored in E2PROM. Thereafter, this process ends.

On the other hand, if a plurality of TID-associated data pieces is stored in the RAM of the storage unit 11a during the execution of the multi-mode, the respective processes of STEPS 40 to 42 described above are repeatedly performed for the number of times corresponding to the number of the TID-associated data pieces.

After returning to FIG. 4 and performing the browsing data storage process (FIG. 4: STEP 8) as described above, the first control process in FIG. 4 ends.

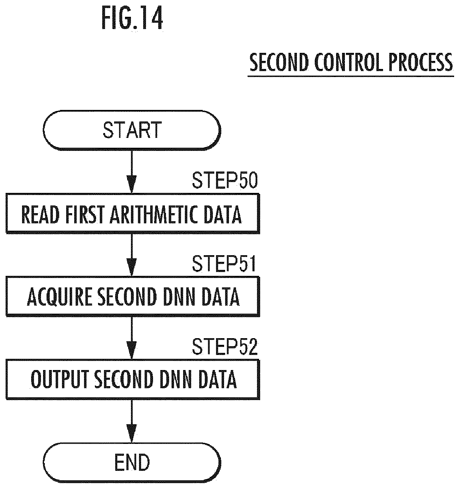

Subsequently, the second control process performed by the second control processing unit 12 will be described with reference to FIG. 14. The second control process is for assigning the estimation of the "species" category and the probability P, which is an estimated probability therefor, to the fish image data in the first arithmetic data calculated by the first arithmetic process described above. The second control process is asynchronous with the first control process described above and is performed in a predetermined control cycle (for example, 200 msec).

As illustrated in FIG. 14, first, the first arithmetic data from the first control processing unit 11 is read (FIG. 14: STEP 50).

Then, the second DNN data acquisition process is performed (FIG. 14: STEP 51). In this second DNN data acquisition process, when the read first arithmetic data is input to the second DNN model and then arithmetic data is output from the second DNN model, the "species" category of the fish in the TID-associated data and the probability P thereof are estimated on the basis of the output data. Then, the second DNN data is acquired with these data pieces as data assigned to the TID-associated data.

In this case, if the "species" category and the probability P thereof are assigned in the first arithmetic data, which is not input yet to the second DNN model, the second DNN data is acquired with the probability P of the "species" category further increased by the estimation process using the second DNN model.

Subsequently, the second DNN data acquired as described above is output to the first control processing unit 11 (FIG. 14: STEP 52). Thereafter, this process ends.

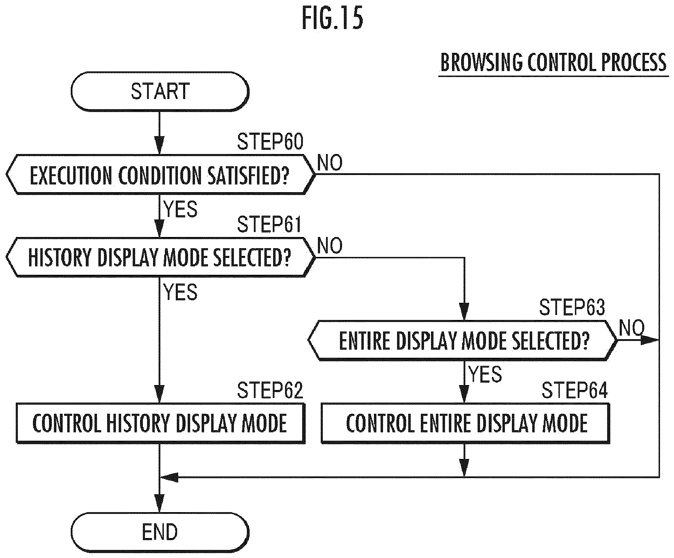

Then, description will be made on the browsing control process performed by the first control processing unit 11 with reference to FIG. 15. The browsing control process is to browse the browsing data stored in the E2PROM of the storage unit 11a as a still image or a moving image by performing the browsing data storage process described above, and the browsing control process is performed in a predetermined control cycle (for example, 100 msec).

As illustrated in FIG. 15, first, it is determined whether or not the execution condition of the browsing control process is satisfied (FIG. 15: STEP 60). In this case, during running of the category display software, a user's input operation (for example, a drag operation) to the display 2 operates the menu bar 2b. Then, if the browsing mode menu (not illustrated) is displayed in the menu bar 2b and the browsing mode menu is selected, it is determined that the execution condition of the browsing control process is satisfied, and otherwise, it is determined that it is not satisfied.

If the determination is negative (FIG. 15: NO in STEP 60), this process is terminated directly. On the other hand, if the determination is affirmative (FIG. 15: YES in STEP 60), in other words, if the execution condition of the browsing control process is satisfied, it is determined whether or not the history display mode is selected.

In this case, if the history display mode menu (not illustrated) displayed in the browsing mode menu is selected by a user's input operation (for example, a drag operation) to the display 2 in a state where the above browsing mode menu is selected, it is determined that the history display mode is selected, and otherwise, it is determined that the history display mode is not selected.

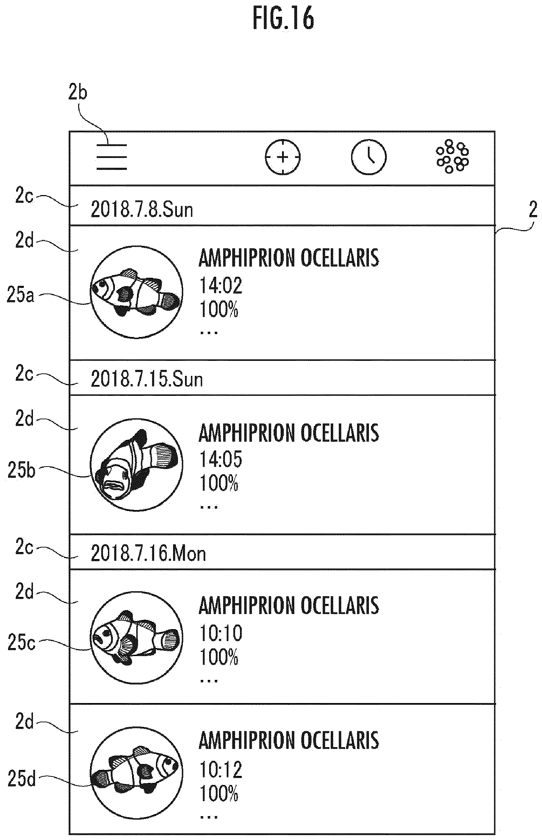

If the determination is affirmative (FIG. 15: YES in STEP 61), the history display mode control process is performed (FIG. 15: STEP 62). In this control process, the browsing data stored in the E2PROM is displayed in a date field 2c in the screen of the display 2 and in a data display field 2d below it, respectively, for example, as illustrated in FIG. 16.

As illustrated in FIG. 16, a year-month-day date when browsing data is acquired is displayed in the date field 2c. Furthermore, in the data display field 2d, fish images 25a to 25d acquired on the acquisition date of the browsing data are displayed as still images in the left part, while the "species" category name, acquisition time, probability, and the like are displayed in order from top to bottom in the right part. Moreover, if the acquisition dates of a plurality of browsing data are the same, the dates are displayed in order from the earliest acquisition time from top to bottom in the data display field 2d.

Then, in the case where the user tries to browse the browsing data of an earlier date, the user performs a scrolling operation on the display 2 to display the browsing data of the early date (not illustrated). Furthermore, if one of the fish images 25a to 25d is selected by a user's input operation (for example, a tap operation) to the display 2, the selected fish image is enlarged and detailed data such as the features related to the fish are displayed (not illustrated). After performing the history display mode control process as described above, this process ends.

On the other hand, if the above determination is negative (FIG. 15: NO in STEP 61) and the history display mode is not selected, it is determined whether or not the entire display mode is selected (FIG. 15: STEP 63).

In this case, if a user's input operation (for example, a drag operation) to the display 2 causes the entire display mode menu to be displayed in the browsing mode menu and then the entire display mode menu is selected in a state where the above-described browsing mode menu is selected, it is determined that the entire display mode is selected, and otherwise it is determined that the entire display mode is not selected.

If the determination is negative (FIG. 15: NO in STEP 63), this process is terminated directly. On the other hand, if the determination is affirmative (FIG. 15: YES in STEP 63), the entire display mode control process is performed (FIG. 15: STEP 64). In this control process, all the browsing data stored in the E2PROM is displayed as still images in a phylogenetic tree state in the screen of the display 2 (not illustrated), though the detailed description is omitted. After performing the entire display mode control process as described above, this process ends.

As described above, according to the image information display device 1 of this embodiment, the first control processing unit 11 performs the first control process. In this first control process, the image data of many fish shot by the camera 3 is input to the first DNN model if the action mode is the multi-mode. Then, if the large category of a plurality of fish is determined to be the category of class Actinopterygii from the output data of the first DNN model, the display position and display size of the image and the display position and display size of the enclosure are determined for each of these fish and TID is associated therewith, by which a plurality of TID-associated data pieces is created.

Subsequently, in the first arithmetic process, the priority queue data group is created on the basis of the probability P and the creation order assigned to the plurality of TID-associated data pieces. In this priority queue data group, the plurality of TID-associated data pieces is queued while the priority of the arithmetic operation is assigned on the basis of the probability P assigned to each TID-associated data piece and of its creation order. Then, the highest-priority TID-associated data piece in the priority queue data group, in other words, the TID-associated data with no or low probability P assigned thereto, is input to the second DNN model as the first arithmetic data.

Furthermore, in the second control process of the second control processing unit 12, the second DNN data is acquired by inputting the first arithmetic data, which is the highest-priority TID-associated data, into the second DNN model. The second DNN data is acquired by the second DNN model with the "species" category of the fish in the image data and its probability P estimated and with those data attached. In that case, this second DNN model is composed of a DNN model in which parameter learning has been sufficiently performed in advance by the deep learning method. Therefore, as the second control process progresses, the probability P of the "species" category in the TID-associated data can be rapidly increased.

In addition, the first arithmetic data input to the second DNN model is the highest-priority TID-associated data in the priority queue data group, in other words, TID-associated data with no or low probability P assigned thereto. Therefore, the probability P of the TID-associated data can be efficiently increased in ascending order of the probability P while avoiding the priority P from being kept in a low state.

Furthermore, in the display control process, only an enclosure 30 is displayed for TID-associated data having no probability P assigned among the plurality of TID-associated data pieces. On the other hand, for TID-associated data to which a probability P is assigned, the "family" or "species" category is displayed along with a probability P and an enclosure 30 on the basis of a comparison result between the probability P and the predetermined threshold Pref. This enables an increase in visibility and interest when the user visually recognizes the "family" or "species" category.

As described above, according to the image information display device 1 of this embodiment, unlike the configuration of Patent Literature 1, the "family" category of each of the plurality of fish can be displayed on the display 2 in a short time after each fish is photographed, by performing the arithmetic operations in the first control processing unit 11 and the second control processing unit 12 in the image information display device 1, without performing data communication between two devices via a network. This allows the "family" category of the photographed fish to be quickly displayed along with the image and improves usability and merchantability.

In this case, according to the applicant's experiment, in the case where the first control process and the second control process are performed in the control cycle described above, it was confirmed that the "family" category can be displayed in an elapsed time of about several hundred msec on average from the timing when TID is associated with image data during execution of the multi-mode. Therefore, even in the case where a dynamic target such as fish is displayed as a moving image, an extremely short waiting time for the "family" category to appear prevents the user from being dissatisfied, unlike Patent Literature 1, thereby preventing an occurrence of an event such that the fish disappears from the display screen of the display 2 before the "family" category is displayed.

In addition thereto, the lowest "species" category is displayed when the probability P of TID-associated data is equal to or higher than the predetermined threshold Pref, and therefore an appropriate setting of this predetermined threshold Pref enables the user to recognize that the lowest category of each fish is estimated accurately. Thereby, the merchantability can be further improved.

Although the embodiment is an example of using aquarium fish as a plurality of targets, the plurality of targets of the present invention is not limited thereto, as long as the targets are shot by an imaging unit. For example, as the plurality of targets, animals and plants other than the living things exhibited in the aquarium may be used, or buildings, vehicles, theme park characters, theme park attractions, or the like other than living things may be used. In that case, as the first DNN model and the second DNN model, DNN models in which the images of these targets are sufficiently learned in advance by the deep learning method may be used.

In addition, although the embodiment is an example in which the camera 3 is used as the imaging unit, the imaging unit of the present invention is not limited thereto, as long as it is capable of simultaneously shooting a plurality of targets. For example, an imaging device to which a solid-state image sensor such as a CCD image sensor is applied may be used as the imaging unit.

Furthermore, although the embodiment is an example in which the smartphone type image information display device 1 is used as the image information display device, the image information display device of the present invention is not limited thereto, as long as it includes an imaging unit, a display unit, a first control unit, and a display control unit. For example, a tablet PC, a laptop PC, a mobile phone, or the like may be used as the image information display device.

On the other hand, although the embodiment is an example in which a DNN model created by the deep learning method is used as an algorithm including a predetermined estimation algorithm, the algorithm of the present invention is not limited thereto, as long as it includes the predetermined estimation algorithm. For example, any one of machine learning methods (unsupervised learning method, supervised learning method, and reinforcement learning method) other than the deep learning method may be used as an algorithm.

In addition, although the embodiment is an example in which the enclosure 30 is used as a frame, the frame of the present invention is not limited thereto, as long as it is displayed so as to surround the image of a target. For example, a rectangular, circular, elliptical, or polygonal frame may be used as the frame.

Furthermore, although the embodiment is an example in which the image of a target is displayed so as to be surrounded by an enclosure 30, instead, the image of the target may be displayed with being correlated with at least one of the probability data representing a probability and the display data through at least one of an arrow and a line segment. For example, an arrow and/or a line segment may be extended from a display part of the probability P and/or the category to point to the image of the target.

In addition, although the embodiment is an example in which a "family" category is used as a higher category, the higher category of the present invention is not limited thereto and may be a category higher than the lowest category among the categories to which the target belongs. For example, "phylum" or "class" may be used as the higher category.

On the other hand, although the embodiment is an example in which a value of 52% is used as the predetermined threshold Pref, the predetermined threshold Pref of the present invention is not limited thereto, and other values may be used. For example, a value less than or greater than 52% may be used as the predetermined threshold Pref.

Furthermore, although the embodiment is an example in which 100% or a value close to 100% is used as the predetermined probability Plmt, the predetermined probability of the present invention is not limited thereto, and other values may be used. For example, a value of several tens of percent may be used as the predetermined probability Plmt.

Furthermore, although the embodiment is an example in which the first control processing unit 11 and the second control processing unit 12 are configured separately from each other, the first control processing unit 11 and the second control processing unit 12 may be composed of one high-performance processor.

On the other hand, although the embodiment is an example in which one data is input to the second DNN model for each control cycle in the second control processing unit 12, a high-performance processor may be used as the processor of the second control processing unit 12 to input a plurality of data pieces placed in the first queue to the second DNN model for each control cycle so that these data pieces are processed in parallel.

Furthermore, although the embodiment is an example in which katakana characters representing a category are used as display data, the display data of the present invention is not limited thereto, as long as it represents a category. For example, hiragana, kanji, a pictogram, and a graphic representing a category or a combination thereof may be used as display data.

Furthermore, although the embodiment is an example in which a number expressed in percentage (%) is used as probability data, the probability data of the present invention is not limited thereto, as long as it represents a probability. For example, a ratio other than a fraction or a percentage may be used as probability data.

Further, a higher performance processor may be used as the processor of the first control processing unit 11 and the second control processing unit 12, so that the control cycle of the first control process and the second control process may be made shorter than the value of the embodiment. With this configuration, the time to increase the probability of image data can be reduced in the first DNN model and the second DNN model, and the time from the start timing of the first control process and the second control process until the "species" category is displayed can be further reduced.

### Description of Reference Numerals

- 1: Image information display device
- 2: Display (Display unit)
- 3: Camera (Imaging unit)
- 11: First control processing unit (First control unit, display control unit)
- 12: Second control processing unit (Second control unit)
- 20 to 24: Fish (Target)
- 30: Enclosure (Frame)
- P: Probability
- Pref: Predetermined threshold

## Claims

1. An image information display device comprising:
an imaging unit capable of simultaneously shooting a plurality of targets;
a display unit that displays an image;
a first control unit that performs a priority addition process of adding priorities to image data of the plurality of targets shot by the imaging unit;
a second control unit that performs an estimation process of estimating a category, to which each of the plurality of targets belongs in a predetermined control cycle, by applying the image data of the plurality of targets with the priorities added by the first control unit to an algorithm including a predetermined estimation algorithm in accordance with the priorities; and
a display control unit that performs a display control process of displaying display data representing the category of the each target estimated in the estimation process along with the image of the each target on the display unit.

2. The image information display device according to claim 1, wherein:
the category to which the each target belongs is estimated along with a probability in the estimation process; and
the image of the each target is displayed with being surrounded by a frame and probability data representing the probability and the display data are displayed near the frame in the display control process.

3. The image information display device according to claim 1, wherein:
the category to which the each target belongs is estimated along with a probability in the estimation process; and
the image of the each target is displayed with being correlated with at least one of the probability data representing the probability and the display data through at least one of an arrow and a line segment in the display control process.

4. The image information display device according to claim 1, wherein:
the category to which the each target belongs is estimated along with the probability in the estimation process; and
the priorities are added to the image data of the plurality of targets estimated along with the probabilities in the estimation process in accordance with the probabilities in the priority addition process.

5. The image information display device according any one of claims 2 to 4, wherein:
the category is estimated as the lowest category to which the each target belongs in the estimation process; and
in the display control process:
the image of the each target is displayed on the display unit with being surrounded by a frame, while display data representing a higher category than the lowest category and probability data representing the probability are displayed near the frame in a case where the probability of the lowest category is less than a predetermined threshold; and
the image of the each target is displayed on the display unit with being surrounded by a frame, while display data representing the lowest category and probability data representing the probability are displayed near the frame in a case where the probability of the lowest category is equal to or greater than the predetermined threshold.
